# FASCICULE DE BREVET EUROPEEN

(11) **EP 1 020 791 B1**
(45) Date de publication et mention de la délivrance du brevet: **13.08.2003**
(21) Numéro de dépôt: 00400111.1
(22) Date de dépôt: 18.01.2000
(51) Int. Cl.: G06F 7/58, H03K 3/84

(54) **Circuit et procédé de génération de nombre aléatoire**
Schaltung und Verfahren zur Zufallszahlerzeugung
Circuit and method for random number generation

(30) Priorité: 18.01.1999 FR 9900447
(43) Date de publication de la demande: 19.07.2000
(73) Titulaire: STMicroelectronics S.A., 92120 Montrouge (FR)
(72) Inventeur: Liardet, Pierre-Yvan, 75116 Paris (FR)
(74) Mandataire: Ballot, Paul

(56) Documents cités:
- EP-A- 0 095 272
- US-A- 5 606 322
- "RANDOM NUMBERS PRODUCED VIA A TECHNIQUE EMPLOYING BOTH A WHITE NOISE GENERATOR AND THE DATA ENCRYPTION ALGORITHM" IBM TECHNICAL DISCLOSURE BULLETIN, vol. 34, no. 7B, 1 décembre 1991 (1991-12-01), pages 316-318, XP000282592 ISSN: 0018-8689

## Description

La présente invention se rapporte à un circuit et à un procédé de génération de nombre aléatoire.

Plus particulièrement, l'invention concerne un circuit et un procédé de génération de nombre aléatoire faisant notamment intervenir une source matérielle de bruit et un générateur de nombre pseudo-aléatoire.

Le domaine d'application de l'invention est essentiellement le domaine de la cryptologie. La cryptologie peut se définir comme étant la science de la dissimulation de l'information. Elle constitue, avec la sécurité physique des composants et des systèmes d'exploitation, la dimension essentielle de la sécurité des cartes à puce. La cryptologie englobe la cryptographie, qui est l'art de chiffrer et de déchiffrer des messages, et la cryptanalyse, qui est l'art de casser les codes secrets.

La génération de nombre aléatoire est un des outils essentiels de la cryptologie.

La génération de nombre aléatoire peut intervenir, par exemple, dans certains protocoles cryptographiques. Certains algorithmes de cryptographie nécessitent l'utilisation de données binaires regroupées en mots de plusieurs bits. Il est parfois possible que les bits représentatifs des données à coder soient en nombre insuffisant pour constituer un nombre exploitable par l'algorithme de cryptographie. Il est alors nécessaire de générer des bits supplémentaires qui, pour des raisons de sécurité, sont générés de façon aléatoire.

Une autre application de la génération de nombre aléatoire est l'utilisation d'une valeur analogique aléatoire déterminée par un nombre généré de façon aléatoire. Des signaux qui sont observables depuis l'extérieur d'un composant électronique peuvent ainsi être perturbés. Par exemple, dans les cartes à puce, des signaux électriques sont accessibles sur différents bus lors du chargement d'une clé secrète dans des registres de la carte à puce. Une clé secrète d'une carte à puce est un ensemble de paramètres qui renferment le secret d'un algorithme cryptographique. Les signaux électriques peuvent trahir la confidentialité de la clé.

L'utilisation à l'intérieur de la carte à puce d'une valeur analogique aléatoire permet de masquer la visibilité de certaines informations confidentielles, notamment les informations relatives aux clés d'une carte à puce.

On peut donner comme dernier exemple d'application de circuit de génération de nombre aléatoire le cas d'un circuit électronique dont les caractéristiques doivent être testées. Il est alors nécessaire de disposer en entrée du circuit d'une batterie de paramètres d'entrée générée de façon totalement aléatoire sur l'ensemble de la plage de fonctionnement du circuit. Il est ainsi possible de s'assurer que le circuit électronique en question n'ait pas un fonctionnement optimisé uniquement sur certains paramètres d'entrée attendus.

Le circuit et le procédé de génération de nombres aléatoires peuvent intervenir dans les applications qui viennent d'être présentées, ainsi que dans toute autre application nécessitant la génération d'un nombre aléatoire.

Le plus souvent, des sources matérielles de bruit sont à l'origine de la génération des nombres aléatoires. Ces sources matérielles de bruit sont alors intégrées dans un système électronique, par exemple une carte à puce. Le système électronique comprend au moins une unité centrale qui gère un ensemble d'opérations. Les sources matérielles de bruit peuvent comprendre notamment un ou plusieurs registres à décalage échantillonnés soit avec une fréquence fixe différente de la fréquence de fonctionnement de l'unité centrale, soit avec une fréquence variable.

Des bits sont ainsi générés de façon plus ou moins aléatoire, souvent par groupes de huit, pour constituer des octets. Les octets générés, qui sont assimilés à des nombres, peuvent être exploités par des circuits contrôlés par l'unité centrale. Des nombres ainsi générés doivent, en fonction des besoins cryptographiques, satisfaire un certain nombre de propriétés basiques de tests empiriques. Ces tests peuvent être des tests de répartition, d'équipartition, de séquences croissantes, décroissantes de nombres générés.

Il se peut que les sources matérielles de bruit ne soient pas suffisamment performantes pour répondre à l'ensemble de ces tests. Par exemple, pour des raisons liées au matériel utilisé, notamment la présence d'une horloge rythmant l'ensemble des opérations gérées par l'unité centrale, certaines séquences de bits peuvent ne jamais ou rarement apparaître en sortie de la source matérielle de bruit. Si en terme de probabilité, un événement correspond à la génération d'un nombre aléatoire, il n'y a alors pas équiprobabilité dans l'ensemble des événements possibles.

Les sources matérielles de bruit utilisées sont, comme il vient d'être exposé, le plus souvent insatisfaisantes relativement à certaines propriétés statistiques auxquelles doivent se conformer des générateurs de nombre aléatoire afin d'être performants dans le domaine de la cryptographie.

Un exemple est donné dans l'article intitulé 'Random numbers produced via a technique employing both a white noise generator and the data encryption algorithm' paru dans IBM Technical disclosure Bulletin, Vol. 34 No 7B, Décembre 1991, pages 316-318.

La présente invention a pour objet de résoudre les problèmes qui viennent d'être décrits. A cet effet, l'invention propose un circuit de génération de nombre aléatoire qui utilise une source matérielle de bruit et qui génère un nombre aléatoire sous forme binaire dont les caractéristiques statistiques sont suffisamment bonnes pour être utilisées de façon satisfaisante en cryptographie.

Pour atteindre ces objectifs, l'invention propose l'utilisation d'un générateur de nombre pseudo-aléatoire qui admet à son entrée un signal numérique correspondant au nombre précédemment émis par le générateur de nombre pseudo-aléatoire, ce signal étant modifié par l'intervention d'un signal numérique issu de la source matérielle de bruit. Le circuit selon l'invention tire ainsi partie du fait que les caractéristiques statistiques en sortie d'un générateur pseudo-aléatoire approprié sont très satisfaisantes. D'autre part, le fait qu'une source matérielle de bruit vienne perturber la séquence parfaitement déterminée d'un générateur de nombre pseudo-aléatoire assure le caractère imprédictible du nombre issu du circuit selon l'invention.

L'invention concerne donc un circuit de génération de nombre aléatoire pour générer, à partir d'une source matérielle de bruit, un nombre aléatoire sous forme binaire caractérisé en ce que le circuit comprend :
- un circuit logique recevant à une première entrée des signaux numériques d'entrée issus de la source matérielle de bruit, et générant un signal numérique intermédiaire ayant une équipartition des bits à zéro et des bits à un;
- un générateur de nombre pseudo-aléatoire recevant le signal numérique intermédiaire issu du circuit logique;
- une unité de mémoire recevant un signal numérique de sortie issu du générateur de nombre pseudo-aléatoire et fournissant un signal numérique de retour à une deuxième entrée du circuit logique ;
- une interface de sortie recevant le signal numérique de sortie issu du générateur de nombre pseudo-aléatoire.

Selon une réalisation particulière du circuit de l'invention, le circuit logique est une porte ou exclusif à deux entrées.

Selon différents modes de réalisation du circuit selon l'invention, le générateur de nombre pseudo-aléatoire est un générateur de nombre pseudo-aléatoire à congruence linéaire ou à inverse congruentiel.

Selon une autre réalisation particulière du circuit de l'invention, la source matérielle de bruit est constituée d'un nombre de registres à décalage suffisant pour fournir un signal numérique d'entrée adapté en taille au générateur de nombre pseudo-aléatoire.

Un autre objet de l'invention est de proposer un procédé de génération de nombre aléatoire pour générer un nombre aléatoire sous forme binaire consistant à :
- générer des signaux numériques d'entrée à partir d'une source matérielle de bruit à une entrée d'un circuit logique caractérisé en ce qu'il comprend les étapes supplémentaires consistant à :
   - produire en sortie d'un générateur de nombre pseudo-aléatoire à partir d'un premier signal numérique d'entrée un signal de sortie numérique correspondant à un nombre aléatoire ;
   - mémoriser dans une unité de mémoire le signal de sortie numérique ;
   - combiner au moyen du circuit logique et à chaque génération d'un nouveau signal numérique d'entrée le nouveau signal numérique d'entrée et un signal de retour correspondant au contenu de l'unité de mémoire afin de générer un signal numérique intermédiaire ayant une équipartition des bits à zéro et des bits à un.
   - transmettre le signal numérique intermédiaire issu du circuit logique au générateur de nombre pseudo-aléatoire ;
   - produire en sortie du générateur de nombre pseudo-aléatoire un signal numérique de sortie.

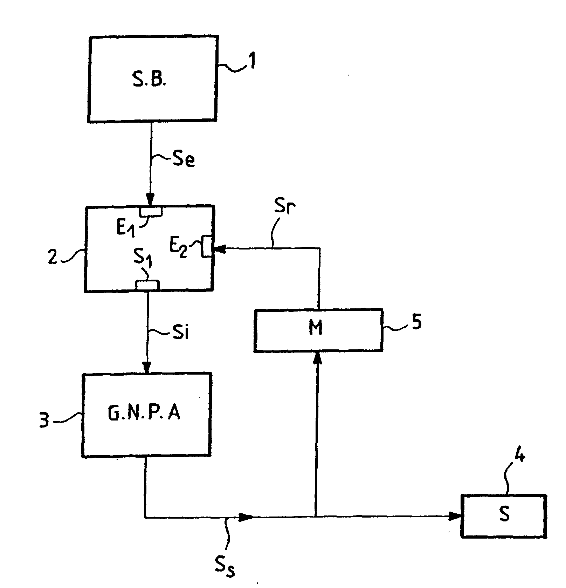

Les différents aspects et avantages de l'invention apparaîtront plus clairement dans la suite de la description en référence à la figure qui n'est donnée qu'à titre indicatif et nullement limitatif de l'invention, telle que revendiquée.

L'unique figure montre un schéma bloc du circuit de génération de nombre aléatoire selon l'invention.

Sur cette figure un générateur matériel de bruit 1 délivre des signaux numériques d'entrée Sₑ. Les signaux numériques d'entrée Sₑ sont transmis à une première entrée E1 d'un circuit logique 2. Le circuit logique 2 délivre à une sortie S1 un signal numérique intermédiaire Sᵢ. Un générateur de nombre pseudo-aléatoire 3 admet pour signal d'entrée le signal numérique intermédiaire Sᵢ issu du circuit logique 2. Le générateur de nombre pseudo-aléatoire 3 délivre un signal numérique de sortie Sₛ. Le signal numérique de sortie Sₛ est simultanément transmis à une interface de sortie 4 et à une unité de mémoire 5. L'unité de mémoire 5 est connectée à une seconde entrée E2 du circuit logique 2. L'unité de mémoire 5 peut ainsi transmettre un signal numérique de retour Sᵣ au circuit logique 2.

Le principe de fonctionnement du circuit selon l'invention est le suivant : la source matérielle de bruit émet les signaux numériques d'entrée Sₑ à différents instants. L'intervalle de temps qui s'écoule entre la génération, par la source matérielle de bruit 1, de deux signaux numériques d'entrée, n'est pas nécessairement constante. Cette génération d'un signal numérique correspond à l'émission par la source matérielle de bruit d'un certain nombre de bits selon le principe précédemment exposé. Le plus souvent les bits sont générés par groupes de huit bits ou de seize bits de façon à correspondre au format de signal accepté en entrée du générateur de nombre pseudo-aléatoires.

Chaque signal numérique d'entrée généré est transmis à la première entrée E1 du circuit logique 2. Simultanément, le contenu de l'unité de mémoire 5 est transmis à la seconde entrée E2 du circuit logique 2. Si aucune donnée n'est disponible dans la mémoire 5 au moment de l'arrivée d'un signal numérique d'entrée à la première entrée du circuit logique 2, le circuit logique 2 transmet un signal numérique intermédiaire semblable au signal numérique d'entrée. Ce cas de figure peut se présenter, par exemple, lors de la génération d'un premier nombre aléatoire.

Il se peut, cependant, que lors de la génération d'un premier nombre aléatoire, l'unité de mémoire 5 ne soit pas vide et transmette un signal de retour au circuit logique 2 en libérant le contenu de sa mémoire.

Selon un autre mode de réalisation de l'invention, l'unité de mémoire transmet au circuit logique 2 les informations qu'elle contient sous forme du signal numérique de retour Sᵣ dès que la mémoire reçoit un nouveau signal de sortie Sₛ. Le signal numérique d'entrée et, le cas échéant, le signal numérique de retour sont combinés dans le circuit logique 2.

Dans tous les cas, le contenu de l'unité de mémoire est effacé dès réception d'un nouveau signal numérique de sortie issu du générateur de nombre pseudo-aléatoire.

Dans une application préférée de l'invention, le circuit logique 2 est constitué d'une unique porte logique ou exclusif à deux entrées. Le choix d'une simple porte logique ou exclusif s'explique par la facilité d'implémentation d'une telle porte logique et par la table de vérité d'une telle porte logique.

En effet, si l'ensemble des combinaisons possibles des signaux d'entrée est soumis, une porte logique ou exclusif à deux entrées présente à sa sortie une équipartition des bits à zéro et des bits à un. Cette équipartition n'est observée ni avec une porte "et", ni avec une porte "ou".

Il se peut cependant que le circuit logique 2 soit constitué de plusieurs portes logiques élémentaires pour former un circuit logique complexe afin d'améliorer les caractéristiques statistiques des signaux numériques intermédiaires dans le cas où les signaux numériques d'entrée ne sont pas statistiquement satisfaisants en terme d'équiprobabilité.

Les signaux numériques intermédiaires sont transmis au générateur de nombre pseudo-aléatoire 3. Il existe plusieurs types de générateurs de nombre pseudo-aléatoire qui sont utilisés et dont on connaît parfaitement les propriétés statistiques.

Le circuit de génération de nombre aléatoire selon l'invention fait intervenir, dans une application préférée, un générateur de nombre pseudo-aléatoire congruentiel linéaire. Un tel générateur de nombre pseudo-aléatoire se caractérise par une relation entre son signal de sortie et son signal d'entrée de la forme : xₙ₊₁ = a.xₙ+b (mod c).

xₙ₊₁ représente la dernière valeur du signal de sortie, qui est fonction de la précédente valeur du signal de sortie xₙ.

Le choix des coefficients a, b et c dépend des caractéristiques statistiques que l'on veut observer en sortie du générateur de nombre pseudo-aléatoire. Leur méthode de détermination est connue et ne sera pas exposée ici.

Selon une autre application de l'invention, un générateur de nombre pseudo-aléatoire de type inverse congruentiel peut être utilisé. Un tel générateur de nombre pseudo-aléatoire est connu et ne sera pas détaillé ici.

D'une façon plus générale, tout générateur de nombre pseudo-aléatoire présentant des caractéristiques statistiques satisfaisantes en terme d'équiprobabilité, de séquence croissante, décroissante, et en terme de répartition sur l'ensemble des valeurs possibles peut être utilisé dans le circuit selon l'invention.

Un générateur de nombre pseudo-aléatoire n'est cependant pas suffisant pour générer des séries de nombre qui soient imprédictibles.

En effet, avec la seule connaissance de quelques valeurs issues du générateur de nombre pseudo-aléatoire, il est possible de caractériser la fonction mathématique du générateur de nombre pseudo-aléatoire. Ainsi, par exemple dans le cas d'un générateur de nombre pseudo-aléatoire de type congruentiel linéaire, la connaissance de trois valeurs de sortie permet la détermination des coefficients a, b et c précédemment mentionnés. Les valeurs suivantes générées par le générateur de nombre pseudo-aléatoire sont alors parfaitement prédictibles, d'autant plus facilement qu'un générateur de nombre pseudo-aléatoire est forcément cyclique. Si elle est liée au caractère imprédictible d'un paramètre, la qualité de la protection d'un circuit est alors affaiblie. Dans l'invention, le rebouclage du circuit par l'unité de mémoire 5 permet la réintroduction du signal numérique de sortie, garantissant ainsi que les propriétés statistiques du générateur de nombre pseudo-aléatoire sont conservées.

Vu sous un autre angle, la participation de la source matérielle de bruit assure une rupture de la séquence prévisible en entrée, et donc en sortie, du générateur de nombre pseudo-aléatoire. La combinaison de la source matérielle de bruit et du générateur de source pseudo-aléatoire telle qu'elle est effectuée dans l'invention permet ainsi d'utiliser les bonnes caractéristiques statistiques du générateur de nombre pseudo-aléatoire tout en modifiant sensiblement ses valeurs d'entrée afin de rendre le résultat imprévisible.

Dans une variante de l'invention, il est possible que la source matérielle de bruit n'émette pas de signaux numériques d'entrée pendant un certain temps. Dans ce cas de figure, qui peut être accidentel ou parfaitement maîtrisé, la partie du circuit composé du générateur de nombre pseudo-aléatoire 3, de l'unité de mémoire 5, du circuit logique 2 et de l'interface de sortie 4 se comporte alors comme un générateur de nombre pseudo-aléatoire classique.

Comme il a été expliqué précédemment, la source matérielle de bruit peut être un registre à décalage échantillonné avec une fréquence qui ne correspond pas à la fréquence de l'unité centrale gérant l'ensemble du circuit concerné.

Il se peut également, par exemple dans le cas où le générateur de nombre pseudo-aléatoire requiert un nombre de bits important à son entrée, que plusieurs registres à décalage soient associés pour produire le signal numérique d'entrée. Un signal numérique d'entrée adapté en taille, en terme de nombre de bits, est ainsi fourni au générateur de nombre pseudo-aléatoire. Chaque registre à décalage est alors considéré comme une source de bruit matérielle élémentaire. L'association de ces registres à décalage peut de plus être effectuée de façon à légèrement améliorer l'équiprobabilité des valeurs que la source matérielle totale de bruit génère.

## Revendications

1. Circuit de génération de nombre aléatoire pour générer, à partir d'une source matérielle de bruit (1), un nombre aléatoire sous forme binaire **caractérisé en ce qu'**il comprend :
- un circuit logique (2) recevant à une première entrée (E1) des signaux numériques d'entrée (Sₑ) issus de la source matérielle de bruit (1) et générant un signal numérique intermédiaire (Sᵢ) ayant une équipartion des bits à zéro et des bits à un;
- un générateur de nombre pseudo-aléatoire (3) recevant le signal numérique intermédiaire (Sᵢ) issu du circuit logique (2) ;
- une unité de mémoire (5) recevant un signal numérique de sortie (Sₛ) issu du générateur de nombre pseudo-aléatoire (3) et fournissant un signal numérique de retour (Sᵣ) à une deuxième entrée (E2) du circuit logique ;
- une interface de sortie (4) recevant le signal numérique de sortie (Sₛ) issu du générateur de nombre pseudo-aléatoire (3).

2. Circuit de génération de nombre aléatoire selon la revendication 1, **caractérisé en ce que** le circuit logique (2) est une porte ou exclusif à deux entrées.

3. Circuit de génération de nombre aléatoire selon l'une des revendications précédentes, **caractérisé en ce que** l'unité de mémoire (5) transmet son contenu sous la forme du signal numérique de retour (Sᵣ) dès qu'un signal d'entrée numérique est produit par la source matérielle de bruit.

4. Circuit de génération de nombre aléatoire selon l'une des revendications 1 ou 2, **caractérisé en ce que** l'unité de mémoire (5) transmet son contenu sous la forme du signal numérique de retour dès réception du signal de sortie (Sₛ) issu du générateur de nombre pseudo-aléatoire (3).

5. Circuit de génération de nombre aléatoire selon l'une des revendications précédentes, **caractérisé en ce que** le générateur de nombre pseudo-aléatoire (3) est un générateur de nombre aléatoire à congruence linéaire.

6. Circuit de génération de nombre pseudo-aléatoire selon l'une des revendications 1 à 4, **caractérisé en ce que** le générateur de nombre pseudo-aléatoire est un générateur de nombre pseudo-aléatoire à inverse congruentiel.

7. Circuit de génération de nombre pseudo-aléatoire selon l'une des revendications précédentes, **caractérisé en ce que** la source matérielle de bruit (1) est constituée d'un nombre de registres à décalage suffisant pour fournir un signal numérique d'entrée adapté en taille au générateur de nombre pseudo-aléatoire (3).

8. Procédé de génération de nombre aléatoire pour générer un nombre aléatoire sous forme binaire consistant à :
- générer des signaux numériques d'entrée (Sₑ) à partir d'une source matérielle de bruit (1) à une première entrée (E1) d'un circuit logique (2), **caractérisé en ce qu'**il comprend les étapes supplémentaires consistant à :
- produire en sortie d'un générateur de nombre pseudo-aléatoire (3) à partir d'un premier signal numérique d'entrée un signal de sortie numérique (Sₛ) correspondant à un nombre aléatoire ;
- mémoriser dans une unité de mémoire (5) le signal de sortie numérique (Sₛ) ;
- combiner au moyen du circuit logique (2) et à chaque génération d'un nouveau signal numérique d'entrée le nouveau signal numérique d'entrée et un signal de retour (Sᵣ) correspondant au contenu de l'unité de mémoire (5) afin de générer un signal numérique intermédiaire (Sᵢ) ayant une équipartition des bits à zéro et des bits à un;
- transmettre le signal numérique intermédiaire (Sᵢ) issu du circuit logique (2) au générateur de nombre pseudo-aléatoire (3) ;
- produire en sortie du générateur de nombre pseudo-aléatoire (3) un signal numérique de sortie (Sₛ).

## Patentansprüche

1. Schaltung zur Erzeugung von Zufallszahlen, um ausgehend von einer mit Rauschen behafteten Quelle (1) eine Zufallszahl in Form einer binären Kennzahl zu erzeugen, **gekennzeichnet durch**:
ein Logikschaltkreis (2), der an einem ersten Eingang (E1) digitale Eingangssignale (Sₑ) erhält, die von der mit Rauschen behafteten Quelle (1) ausgegeben werden, und der eine digitales Zwischensignal (Sᵢ) erzeugt, das eine Gleichverteilung der Null-Bits und der Eins-Bits umfaßt;
ein Pseudozufallszahlengenerator (3), der das digitale Zwischensignal (Sᵢ) empfängt, das von dem Logikschaltkreis (2) ausgegeben wird;
eine Speichereinheit (5), die ein digitales Ausgangssignal (Sₛ) empfängt, das von dem Pseudozufallszahlengenerator (3) ausgegeben wird, und ein digitales Rücksignal (Sᵣ) an einen zweiten Eingang (E2) des Logikschaltkreises liefert;
eine Ausgangsschnittstelle (4), welche das digitale Ausgangssignal (Sₛ) empfängt, daß von dem Pseudozufallszahlengenerator (3) ausgegeben wird.

2. Schaltkreis zur Erzeugung von Zufallszahlen nach Anspruch 1, **dadurch gekennzeichnet, daß** der Logikschaltkreis 2 ein Exklusiv-ODER-Gatter mit zwei Eingängen ist.

3. Schaltkreis zur Erzeugung von Zufallszahlen nach einem der vorangehenden Ansprüche, **dadurch gekennzeichnet, daß** die Speichereinheit (5) ihren Inhalt in Form des digitalen Rücksignals (Sᵣ) überträgt, sobald ein digitales Signal von der mit Rauschen behafteten Quelle erzeugt wird.

4. Schaltkreis zur Erzeugung von Zufallszahlen nach einem der Ansprüche 1 oder 2, **dadurch gekennzeichnet, daß** die Speichereinheit (5) ihren Inhalt in der Form des digitalen Rücksignals bei Empfang des Ausgangssignals (Sₛ), welches von dem Pseudozufallszahlengenerator (3) ausgegeben wird, überträgt.

5. Schaltkreis zur Erzeugung von Zufallszahlen nach einem der vorangehenden Ansprüche, **dadurch gekennzeichnet, daß** der Pseudozufallszahlengenerator (3) ein Generator zur Erzeugung von Zufallszahlen mit linerarer Kongruenz ist.

6. Schaltkreis zur Erzeugung von Pseudozufallszahlen nach einem der Ansprüche 1 bis 4, **dadurch gekennzeichnet, daß** der Pseudozufallszahlengenerator ein Generator zur Erzeugung von Pseudozufallszahlen mit inverser Kongruenz ist.

7. Schaltkreis zur Erzeugung von Pseudozufallszahlen nach einem der vorangehenden Ansprüche, **dadurch gekennzeichnet, daß** die mit Rauschen behaftete Quelle (1) durch eine Anzahl Schieberegister gebildet wird, die ausreichen, um ein digitales Eingangssignal zu liefern, daß in seiner Größe an den Pseudozufallszahlengenerator (3) angepaßt ist.

8. Verfahren zur Erzeugung von Zufallszahlen, um eine Zufallszahl in binärer Form zu erzeugen, mit folgenden Verfahrensschritten:
- Erzeugen von digitalen Eingangssignalen (Sₑ) ausgehend von einer mit Rauschen behafteten Quelle (1) an einem ersten Eingang (E1) eines Logischaltkreises (2), **gekennzeichnet durch** die folgenden weiteren Verfahrensschritte:
- Erzeugen eines digitalen Ausgangssignals (Sₛ), das einer Zufallszahl entspricht, am Ausgang eines Pseudozufallszahlengenerators (3) ausgehend von einem ersten digitalen Eingangssignal;
- Speichern des digitalen Ausgangssignals (Sₛ) in einer Speichereinheit (5);
- mit Hilfe des Logikschaltkreises (2) und bei jeder Erzeugung eines neuen digitalen Eingangssignals, Kombinieren des neuen digitalen Eingangssignals und eines Rücksignals (Sᵣ), welches dem Inhalt der Speichereinheit (5) entspricht, um eine digitales Zwischensignal (Sᵢ) zu erzeugen, das eine Gleichverteilung der Null-Bits und der Eins-Bits umfaßt;
- Übertragen des digitalen Zwischensignals (Sᵢ), daß von dem Logikschaltkreis (2) ausgegeben wird, an den Pseudozufallszahlengenerator (3);
- Erzeugen eines digitalen Ausgangssignals (Sₛ) an dem Ausgang des Pseudozufallszahlengenerators.

## Claims

1. A circuit for the generation of random numbers to generate, from a physical source of noise (1), a random number in binary form, **characterised**
**in that** it comprises:
- a logic circuit (2) receiving at a first input (E1) digital input signals (Sₑ) produced by the physical source of noise (1) and generating an intermediate digital signal (Si) having an equal distribution of "0" bits and "1" bits;
- a pseudo-random number generator (3) receiving an intermediate digital signal (Sᵢ) from the logic circuit (2);
- a memory unit (5) receiving a digital output signal (Sₛ) from the pseudo-random number generator (3) and supplying a digital feedback signal (Sᵣ) to a second input (E2) of the logic circuit;
- an output interface (4) receiving the digital output signal (Sₛ) produced by the pseudo-random number generator (3).

2. A circuit for the generation of random numbers according to Claim 1, **characterised in that** the logic circuit (2) is an exclusive-OR gate with two inputs.

3. A circuit for the generation of random numbers according to one of the previous Claims, **characterised in that** the memory unit (5) transmits its contents in the form of the digital feedback signal (Sᵣ) whenever a digital input signal is produced by the physical source of noise.

4. A circuit for the generation of random numbers according to one of Claims 1 and 2, **characterised in that** the memory unit (5) transmits its. contents in the form of the digital feedback signal whenever it receives the output signal (Sₛ) produced by the pseudo-random number generator (3).

5. A circuit for the generation of random numbers according to one of the previous Claims, **characterised in that** the pseudo-random number generator (3) is a generator of random numbers with linear congruence.

6. A circuit for the generation of random numbers according to one of Claims 1 to 4, **characterised in that** the pseudo-random number generator is a generator of random numbers with reciprocal congruence.

7. A circuit for the generation of random numbers according to one of the previous Claims, **characterised in that** the physical source of noise (1) is constituted from a sufficient number of shift registers to provide a digital input signal of suitable size for the pseudo-random number generator (3).

8. A random number generation procedure to generate a random number in binary form consisting of:
- generating digital input signals (Sₑ) from a physical source of noise (1) with a first input (E1) to a logic circuit (2) **characterised in that** it includes additional stages which consist of:
- producing, at the output from a pseudo-random number generator (3) from a first digital input signal, a digital output signal (Sₛ) which corresponds to a random number;
- memorising the digital output signal (Sₛ) in a memory unit (5);
- combining, using the logic circuit (2) at each generation of a new digital input signal, the new digital input signal and a feedback signal (Sᵣ) corresponding to the contents of the memory unit (5);
- transmitting the intermediate digital signal (Sᵢ) produced by the logic circuit (2) to the pseudo-random number generator (3);
- producing, at the output of the pseudo-random number generator (3,) a digital output signal (Sₛ) in order to generate an intermediate digital signal (Si) having an equal distribution of "0" bits and "1" bits.
